(19) Europäisches Patentamt
European Patent Office
Office européen des brevets

(11) EP 4 036 130 B1

(12) EUROPEAN PATENT SPECIFICATION

(45) Date of publication and mention of the grant of the patent:
**22.03.2023 Bulletin 2023/12**

(21) Application number: **21154168.5**

(22) Date of filing: **29.01.2021**

(51) International Patent Classification (IPC):
***C08F 210/16*** $^{(2006.01)}$ ***C08F 255/02*** $^{(2006.01)}$
***C08L 51/06*** $^{(2006.01)}$ ***C08J 5/18*** $^{(2006.01)}$

(52) Cooperative Patent Classification (CPC):
(C-Sets available)
**C08F 210/16; B29C 48/10; B29C 48/405; B29C 48/41; B29C 48/43; B29C 48/92; C08F 255/02; C08J 5/18; C08L 23/0815; C08L 23/26; C08L 51/06;** B29C 48/022; B29C 2948/9259; B29C 2948/926; B29C 2948/92704; (Cont.)

# (54) MODIFICATION OF POLYETHYLENE COPOLYMER

MODIFIZIERUNG VON POLYETHYLENCOPOLYMER

MODIFICATION DE COPOLYMÈRE DE POLYÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.08.2022 Bulletin 2022/31**

(73) Proprietor: **Borealis AG**
**1020 Vienna (AT)**

(72) Inventors:
- **WANG, Jingbo**
**4021 Linz (AT)**
- **BERNREITNER, Klaus**
**4021 Linz (AT)**
- **VAHTERI, Markku**
**06101 Porvoo (FI)**
- **BERGER, Friedrich**
**4021 Linz (AT)**

(74) Representative: **Kador & Partner PartG mbB**
**Corneliusstraße 15**
**80469 München (DE)**

(56) References cited:
**JP-A- 2000 248 097 US-A1- 2015 031 838**

- **SIPAUT C.S. ET AL: "The Effect of Different Peroxide on LDPE Foam Properties in the Presence of Polyfunctional Monomers", CELLULAR POLYMERS., vol. 31, no. 3, 1 May 2012 (2012-05-01), pages 145-164, XP055825004, GB ISSN: 0262-4893, DOI: 10.1177/026248931203100302**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08F 4/65912; C08F 4/65916; C08J 2323/06;
C08L 2203/162; C08L 2205/02; C08L 2308/00;
C08L 2312/00; C08L 2314/06

C-Sets
**C08F 210/16, C08F 2/001;**
**C08F 210/16, C08F 4/6492;**
**C08F 210/16, C08F 4/65925;**
**C08F 255/02, C08F 222/103;**
**C08L 23/0815, C08L 23/0815, C08L 23/0815;**
**C08L 23/26, C08L 23/06;**
**C08L 51/06, C08L 23/06;**
C08F 210/16, C08F 210/08, C08F 2500/12,
C08F 2500/26;
C08F 210/16, C08F 210/08, C08F 2500/12,
C08F 2500/26, C08F 2500/27;
C08F 210/16, C08F 210/14, C08F 210/08,
C08F 2500/12, C08F 2500/26, C08F 2500/27,
C08F 2500/34;
C08F 210/16, C08F 210/14, C08F 2500/08,
C08F 2500/12, C08F 2500/26, C08F 2500/27

## Description

The present invention is directed to a process for producing modified polyethylene having decreased melt flow rate (ISO1133, 2.16 kg, 190°C) ($MFR_2$) and to blown films made from the modified polyethylene. In particular, the present invention is directed to a process for reducing the $MFR_2$ of a metallocene produced polyethylene copolymer and simultaneously improving melt strength ($F_{30}$) without an increase in gel content by extruding said polyethylene copolymer in the presence of a poly(n)functional acrylate.

## BACKGROUND

Polyethylene, especially metallocene produced linear low density polyethylene (mLLDPE) is widely used in daily life due to its low cost and high performance. It is known that, depending on the application, different MFRs and density are required. For example, low MFRs are needed for pipe or packaging applications, like films, where higher impact is required.

In addition to low MFR, enhanced melt strength is of significant importance for a variety of different applications such as e.g. pipes, injection moulding applications, films and blow moulding applications. Melt strength is directly connected to the rheological properties of a polyolefin.

But as is known, certain limits to rheological properties such as melt flow rate or viscosity are imposed by the polymerization catalyst used for polymerizing a polyolefin and/or by sequential multi-stage polymerization processes in which two or more polymerization reactors are connected in series to allow the polymerization of multimodal polyolefin.

One simple way to produce lower MFR (i.e. higher molecular weight) polyethylene is to use less hydrogen in its manufacture. However, just using hydrogen to control molecular weight is not always an option. Not all catalysts can make lower MFR materials as they do respond to the presence of hydrogen in an appropriate way. This is a particular problem with single site catalysts, like metallocene catalysts. Achieving low $MFR_2$ values in polyethylene copolymers using hydrogen molecular weight control is challenging.

The present inventors therefore sought a method to reduce the $MFR_2$ of polyethylene copolymers, in particular LLDPEs prepared using a metallocene catalyst (mLLDPE). Such modified polymers would desirably show a combination of processability improved over the starting material with retention or improvement of toughness, low heat seal initiation temperature, low haze or hot tack properties characteristic without an increase in gel content of the starting material.

The present inventors have now found that $MFR_2$ can be reduced in a metallocene produced polyethylene copolymer by extrusion with a poly(n)functional acrylate, with $n \geq 2$, as co-agent. Moreover, this reduction in $MFR_2$ can be achieved without a consequential increase in gels, but with an increase in melt strength. Optionally a radical initiator like a peroxide can be added in addition.

In WO 2010/009825 the use of poly(n)functional acrylate, with $n \geq 2$, preferably1,4-butanediol-dimethacylate as co-agent is disclosed for modifying heterophasic propylene copolymers, which can be used for moulded articles, e.g. injection moulded articles. The poly(n)functional acrylate has to be combined with peroxide in a specific ratio and with an acid scavenger in order to achieve the desired results, i.e. improved processability during injection moulding and showing minimum presence of tiger stripes or flow marks when formed into moulded articles. The reduction of $MFR_2$ is not aimed and not discussed. On the contrary, WO 2010/009825 describes the visbreaking of the heterophasic propylene copolymers, where the peroxides initiate a breakage of the longest chains of the polymer molecules and, which subsequently, results in a decrease in viscosity of the polymer, an increase in melt flow rate, and a narrower molecular weight distribution, characteristics which are directly responsible for improved flow properties of polypropylene in order to make the product more suitable for certain applications.

## Summary of the Invention

The present invention is therefore, viewed from one aspect, directed to a process for the reduction of the $MFR_2$ (ISO1133, 2.16 kg, 190°C) of a polyethylene comprising the following steps

(i) forming a mixture (M) by combining

(i-1) a metallocene produced polyethylene copolymer having an $MFR_2$ (starting) of 0.5 to 10.0 g/10min (ISO1133, 2.16 kg, 190°C) and a density from 910 to 945 kg/$m^3$ (ISO 1183) with
(i-2) 0.05 to 1.0 wt%, based on the total weight of the mixture (M), of a poly(n)functional acrylate, with $n \geq 2$, as co-agent and

optional (i-3) a radical initiator;
(ii) extruding the mixture (M) of step (i) at a temperature above the melting point of the polyethylene copolymer and,

in case a radical initiator (i-3) is present, at a temperature above the initiation temperature of the initiator to yield a modified polyethylene copolymer in the form of pellets;

wherein said pellets have a density of 910 to 945 kg/$m^3$ (ISO 1183),
a xylene insoluble content (XHU, determined as described in the experimental part) of below 0.1 wt%,
an $MFR_2$ (pellets) of 0.001 to 4.0 g/10min (ISO1133, 2.16 kg, 190°C) and wherein the $MFR_2$ (pellets) is lower than $MFR_2$ (starting) such that $MFR_2$ (pellets)/$MFR_2$ (starting) is 0.60 or less and
a $F_{30}$ melt strength of >10.5 cN as measured according to ISO 16790:2005 at a die pressure of 30 bar.

Viewed from another aspect, the invention is directed to the use of a poly(n)functional acrylate, with $n \geq 2$ to reduce the $MFR_2$ (ISO1133, 2.16 kg, 190°C) of a metallocene produced polyethylene copolymer by at least 50%, wherein the gel content measured as XHU of said polyethylene copolymer after treatment with said poly(n)functional acrylate is from 0.0 wt% to less than 0.1 wt%, preferably from 0.0 wt% to less than 0.05 wt%.

Viewed from a further aspect, the invention is directed to a blown film comprising the modified polyethylene and 0.0 to 40.0 wt% of an LDPE, wherein the blown film is characterized by a dart-drop impact strength (DDI) determined according to ASTM D1709, method A on a 40 μm monolayer blown film of at least 380 g up to 1700 g, preferably in the range of 400 to 1200 g, and more preferably in the range of 450 to 1000 g.

## Detailed Description of the Invention

This invention relates to a process for reducing the $MFR_2$ (ISO1133, 2.16 kg, 190°C) of a polyethylene copolymer using a poly(n)functional acrylate, with $n \geq 2$, as co-agent and optional a radical initiator, like a peroxide. In particular, this reduction in $MFR_2$ can be effected without an increase in gel content and whilst maintaining beneficial mechanical properties such as high tensile modulus and dart drop impact strength. Optical properties and sealing properties are also retained. In addition, the melt strength ($F_{30}$) of the polyethylene copolymer is increased.

## Metallocene Produced Polyethylene Copolymer (i-1)

Metallocene produced polyethylene copolymer is defined in this invention as polyethylene, which has been produced in the presence of a metallocene catalyst.

The metallocene produced polyethylene copolymer used as the starting material in the process of the present invention is a polyethylene copolymer having a density (ISO 1183) of 910 to 945 kg/$m^3$. Preferably, the density is in the range of 910 to 940 kg/$m^3$, more preferably in the range of 912 to 930 kg/$m^3$ and even more preferably in the range of 915 to 928 kg/$m^3$. It is preferred if the metallocene produced polyethylene copolymer is a metallocene produced linear low density polyethylene (LLDPE), which has a well known meaning in the state of the art.

The metallocene produced polyethylene copolymer used as starting material in the process of the present invention is a copolymer of ethylene with one or more alpha-olefin comonomer(s) having from 3 to 10 carbon atoms. Ideally, the comonomer(s) present are selected from the group consisting of 1-butene, 1-hexene or 1-octene. Most preferred comonomers are 1-butene and/or 1-hexene.

The metallocene produced polyethylene copolymer may thus contain from 0.5 to 10.0 mol% of comonomer(s), preferably from 1.0 to 8.0 mol% of comonomer(s) and more preferably from 2.0 to 7.0 mol% of comonomer(s).

Thus, the metallocene produced polyethylene copolymer may contain from 90.0 to 99.5 mol%, preferably from 92.0 to 99.0 mol%, more preferably from 93.0 to 98.0 mol% of units derived from ethylene and from 0.5 to 10.0 mol%, preferably 1.0 to 8.0 mol%, more preferably 2.0 to 7.0 mol% of units derived from the comonomer(s).

The starting melt flow rate (ISO1133, 2.16 kg, 190°C) ($MFR_2$) of the metallocene produced polyethylene copolymer in the process of the present invention is in the range of 0.5 to 10.0 g/10min, preferably in the range of 0.8 to 5.0 g/10 min, more preferably in the range of 1.0 to 3.0 g/10 min and even more preferably in the range of 1.2 to 2.5 g/10 min.

The use of a polyethylene copolymer having a density of 912 to 930 kg/$m^3$ or 915 to 928 kg/$m^3$ and a $MFR_2$ of 1.0 to 3.0 g/10 min or 1.2 to 2.5 g/10 min is especially preferred.

In one embodiment, the $MFR_2$ of the starting material is measured on powder.

The melting temperature (Tm) measured according to ISO 11357-3 of the metallocene produced polyethylene copolymer is preferably at least 115°C, more preferably at least 117°C and even more preferred at least 120°C. Thus, it is in particular appreciated that the melting temperature (Tm) measured according to ISO 11357-3 of the metallocene produced polyethylene copolymer is in the range of 115°C to 135°C, preferably in the range of 117°C to 133°C, and even more preferably in the range of 120°C to 130°C.

The metallocene produced polyethylene copolymer used as starting material in the process of present invention may be in any form including particles, pellets, or flakes, but it is preferably in the form of a powder when added to the extruder.

In an embodiment of the present invention, the metallocene produced polyethylene copolymer of use in the invention is preferably multimodal, such as bimodal or trimodal. It is preferred that the polyethylene copolymer used as a starting material therefore has a molecular weight distribution (Mw/Mn) in the range of 2.0 to 20.0, more preferably in the range of from 2.5 to 15.0, most preferably in the range of from 3.0 to 10.0.

In one embodiment, the metallocene produced polyethylene copolymer is a polyethylene terpolymer, preferably a multimodal polyethylene terpolymer, of ethylene and at least two alpha-olefin comonomers having from 3 to 10 carbon atoms. The term terpolymer is used herein to define a polyethylene polymer with at least two comonomers.

Preferably, the multimodal ethylene terpolymer is a copolymer of ethylene and at least two comonomers selected from 1-butene, 1-hexene, 1-octene, preferably 1-butene and 1-hexene. It is further preferred that the multimodal ethylene terpolymer is a terpolymer of ethylene and exactly two comonomers selected from 1-butene, 1-hexene, or 1-octene, preferably 1-butene and 1-hexene.

Ideally, the multimodal polyethylene terpolymer comprises a first copolymer component (A) of ethylene and an alpha-olefin comonomer having from 4 to 10 carbon atoms and a second copolymer component (B) of ethylene and an alpha-olefin comonomer having from 6 to 10 carbon atoms. Preferably, the comonomers used in the two components are different.

Preferably, the amount (mol%) of alpha-olefin comonomer having from 4 to 10 carbon atoms, preferably selected from 1-butene, 1-hexene and 1-octene, especially 1-butene, present in the first copolymer component (A) is from 0.05 mol% to less than 1.0 mol%, more preferably from 0.10 to 0.90 mol%, even more preferably of from 0.15 to 0.80 mol%, and still more preferably of from 0.20 to 0.60 mol%.

In an embodiment, the amount (mol%) of alpha-olefin comonomer having from 6 to 10 carbon atoms, preferably selected from 1-hexene and 1-octene, especially 1-hexene, present in the second copolymer component (B) is of 2.5 to 10.0 mol%, preferably of 3.0 to 9.0 mol%, more preferably of 3.5 to 8.0 mol%, even more preferably of 4.0 to 7.0 mol%.

Especially preferred is a multimodal ethylene terpolymer comprising

- a first copolymer component (A) of ethylene and 1-butene, and
- a second copolymer component (B) of ethylene and 1-hexene.

By multimodal polyethylene copolymer is meant a copolymer which contains at least two distinct components having different average molecular weights, different contents of comonomer or both. Ideally, the GPC curve of such a material will show two distinct peaks. Multimodal polyethylene copolymers are well known and are widely described in the literature.

The multimodal polyethylene terpolymer of the present invention is preferably produced by copolymerizing ethylene and at least two comonomers in two or more polymerization stages where the polymerization conditions are sufficiently different to allow production of different polymers in different stages. Such polymers are described inter alia in WO 2016/198273. Full details of how to prepare suitable multimodal polyethylene terpolymers can be found in this reference.

As stated above in an embodiment the multimodal polyethylene terpolymer comprises a first copolymer component (A) and a second copolymer component (B).

*First copolymer component (A)*

The first copolymer component (A) comprises ethylene and a first alpha-olefin comonomer having 4 to 10 carbon atoms, preferably selected from 1-butene, 1-hexene and 1-octene, more preferably 1-butene. In a preferred embodiment, the first copolymer component (A) consists of ethylene and 1-butene.

The first copolymer component (A) may have a melt flow rate $MFR_2$ (ISO1133, 2.16 kg, 190°C) of from 1.0 to 20.0 g/10min, preferably 2.0 to 15.0 g/10 min, more preferably 3.0 to 10.0 g/10 min.

Furthermore, the first copolymer component (A) may have a density (ISO 1183) of from 925 to 955 kg/$m^3$, preferably from 930 to 955 kg/$m^3$, more preferably from 935 to 955 kg/$m^3$, and even more preferably from 935 to 945 kg/$m^3$.

The first copolymer component (A) is ideally produced in a first polymerization stage, which is preferably a slurry polymerization step. Hydrogen can be introduced into the first polymerization stage for controlling the $MFR_2$ of the first copolymer component (A).

The first alpha-olefin comonomer is introduced into the first polymerization stage for controlling the density of the first copolymer component. As discussed above, the comonomer is an alpha-olefin having from 4 to 10 carbon atoms, preferably 1-butene, 1-hexene or 1-octene, more preferably 1-butene.

In a most preferred embodiment, the multimodal polyethylene terpolymer comprises a first and a second copolymer component, wherein the first copolymer component (A) comprises at least a first and a second fraction (A-1 and A-2), preferably consists of first fraction (A-1) and second fraction (A-2).

These two or more fractions of the first copolymer component (A) may be unimodal in view of their molecular

weight and/or their density or they can be bimodal in respect of their molecular weight and/or their density.

It is within the scope of the invention, that the first and the second fraction (A-1 and A-2) of the first copolymer component (A) are present in a weight ratio of 4:1 up to 1:4, such as 3:1 to 1:3, or 2:1 to 1:2, or 1:1.

Each fraction of the first copolymer component (A) is a polyethylene copolymer with one or more alpha-olefins having from 4 to 10 carbon atoms, preferably 1-butene, 1-hexene or 1-octene, more preferably 1-butene. Ideally, each fraction contains a single comonomer. Most preferred, each fraction is an ethylene-1-butene copolymer.

It is further preferred, that the two or more fractions of the first copolymer component (A) are produced in two or more consecutive reactors. The first copolymer component (A) can be unimodal or bimodal in view of $MFR_2$-values and/or density-values.

For a person skilled in the art it will be clear that when producing the first and the second fraction of the first copolymer component (A) in two consecutive reactors, there has to be a certain difference in the $MFR_2$-values and/or density-values of each fraction to ensure that these can be distinguished. In case the fractions are different in $MFR_2$-values and/or density-values, the first copolymer component (A) is bimodal. Ideally, the fractions are produced in two consecutive slurry reactors such as loop reactors.

*Second copolymer component (B)*

The second copolymer component (B) comprises ethylene and a second alpha-olefin comonomer having 6 to 10 carbon atoms, such as 1-hexene or 1-octene, more preferably 1-hexene. It is further preferred that the second alpha-olefin comonomer has more carbon atoms than the first alpha-olefin monomer, i.e. the comonomer in the second copolymer component (B) is higher than the comonomer in the first copolymer component (A), e.g. 1-hexene vs 1-butene.

It is further preferred that the second alpha-olefin comonomer has 2 more carbon atoms than the first alpha-olefin monomer. In a preferred embodiment, the second copolymer component (B) consists of ethylene and 1-hexene.

The second copolymer component (B) is produced in the presence of any previously produced polymer components. Ideally, it is produced in a gas phase reactor, e.g. as discussed in WO2016/198273.

*Multimodal polyethylene terpolymer*

The ratio (i.e. the split) between the first and the second copolymer component (A) and (B) within the final multimodal terpolymer of ethylene and at least two alpha-olefin-comonomers has significant effect on the mechanical properties of the final composition.

It is hence envisaged within the scope of the invention that the second copolymer component (B) forms a significant part of the polymer fractions present in the multimodal polyethylene terpolymer, i.e. at least 50.0 wt% of the final multimodal polyethylene terpolymer, preferably 53.0 wt% or more, such as 55.0 wt% or more.

More preferably, the second copolymer component (B) may form up to 65.0 wt% of the multimodal polyethylene copolymer.

Consecutively the first copolymer component (A) forms at most 50.0 wt% or less of the multimodal polyethylene terpolymer, preferably 47.0 wt% or less, such as 45.0 wt% or less. More preferably, the first copolymer component (A) may form 35.0 wt% up to at most 50 wt% of the multimodal polyethylene terpolymer.

A bimodal polyethylene terpolymer can be produced with a 2-stage or 3-stage process, preferably comprising at least one slurry reactor (loop reactor), whereby the slurry loop reactor is connected in series with a gas phase reactor (GPR), so that the ethylene polymer leaving the slurry reactor is fed to the GPR to produce bimodal polyethylene terpolymer. Alternatively, the process comprises 2 slurry reactors (loop reactors) and one gas phase reactor connected in series, whereby for the 2 slurry reactors reaction conditions are chosen in a way that in both slurry reactors the same product is produced (same MFR and density, i.e. first and second fraction (A-1) and (A-2) are the same).

Trimodal polyethylene terpolymers can be produced with a 3-stage process, preferably comprising a first slurry reactor (loop reactor 1), whereby the first slurry loop reactor is connected in series with another slurry reactor (loop reactor 2), so that the first fraction (A-1) produced in the loop reactor 1 is fed to the loop reactor 2, wherein the second fraction (A-2) is produced in the presence of the first fraction (A-1). The loop reactor 2 is thereby connected in series to a gas phase reactor (GPR), so that the first copolymer component (A) leaving the second slurry reactor is fed to the GPR to produce a trimodal polyethylene terpolymer. In this case, the reaction conditions in the two slurry reactors are chosen in a way that in the two slurry reactors different products in view of MFR and/or density are produced.

A suitable process is the Borstar process or Borstar PE 3G process.

The multimodal polyethylene terpolymer used according to the present invention is therefore preferably produced in a loop gas cascade, more preferably in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is

preferably conducted in slurry.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final multimodal terpolymer. This can counted as part of the first copolymer component.

*Catalyst*

The polyethylene copolymer used in the process of the invention is one made using a metallocene catalyst. A metallocene catalyst comprises a metallocene complex and a cocatalyst. It is preferred if the metallocene complex comprises an element of a group (IV) metal coordinated to at least one, preferably at least two cyclopentadienyl type ligands.

The cyclopentadienyl type group ligand has been widely described in the scientific and patent literature for about twenty years. Essentially any ligand containing the general structure:

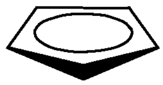

can be employed herein.

The cyclopentadienyl type ligand can be an unsubstituted or substituted and/or fused cyclopentadienyl ligand, e.g. substituted or unsubstituted cyclopentadienyl, substituted or unsubstituted indenyl, substituted or unsubstituted tetrahydroindenyl or substituted or unsubstituted fluorenyl ligand.

Suitable ligands therefore include:

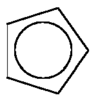
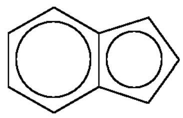

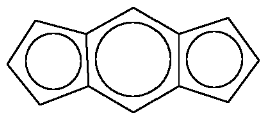
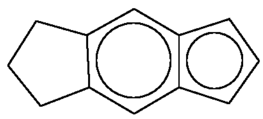

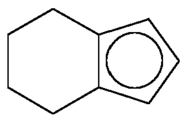

which can obviously be substituted. The metallocene complex preferably does not comprise a single cyclopentadienyl type ligand. Preferably, two such cyclopentadienyl type ligands are present, optionally joined by a bridging group. The substitution pattern on the two ligands may be the same or different. Metallocene complexes of use in this invention can therefore be symmetrical or asymmetrical.

The two cyclopentadienyl ligands of the present invention can be bridged or unbridged as is well known in the art. It is generally envisaged that the principles of this invention can be applied to any bis-cyclopentadienyl type ligand system.

The metallocene complex will comprise at least one metal ion of group (IV) as is well known. This will be η-bonded to the cyclopentadienyl type rings. Such η-bonded metals are typically Zr, Hf or Ti, especially Zr or Hf.

In a preferred embodiment, the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;
R is a bridge of 1-7 atoms, e.g. 1 to 2 atoms;
X is a sigma ligand;
n is 0 or 1;
M is a transition metal of Group 4, e.g. Ti, Zr or Hf, especially Zr or Hf.

In a preferred embodiment, the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, $-SiR''_3$, $-OSiR''_3$, $-SR''$, $-PR''_2$, OR" or-$NR''_2$,

each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e.g. in case of $-NR''_2$, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as $C_1$-$C_{20}$-alkyl, tri($C_1$-$C_{20}$-alkyl)silyl, tri($C_1$-$C_{20}$-alkyl)siloxy or $C_6$-$C_{20}$-aryl substituents); or a bridge of 1-3, e.g. one or two, hetero atoms, such as silicon, germanium and/or oxygen atom(s), e.g. $-SiR^2_2-$, wherein each $R^2$ is independently $C_1$-$C_{20}$-alkyl, $C_{3-12}$-cycloalkyl, $C_6$-$C_{20}$-aryl or tri($C_1$-$C_{20}$-alkyl)silyl- residue, such as trimethylsilyl;

M is a transition metal of Group 4, e.g. Ti, Zr or Hf, especially Zr or Hf;

each X is independently a sigma-ligand, such as H, halogen, $C_1$-$C_{20}$-alkyl, $C_1$-$C_{20}$-alkoxy, $C_2$-$C_{20}$-alkenyl, $C_2$-$C_{20}$-alkynyl, $C_3$-$C_{12}$-cycloalkyl, $C_6$-$C_{20}$-aryl, $C_6$-$C_{20}$-aryloxy, $C_7$-$C_{20}$-arylalkyl, $C_7$-$C_{20}$-arylalkenyl, $-SR''$, $-PR''_3$, $-SiR''_3$, $-OSiR''_3$, $-NR''_2$ or $-CH_2$-Y, wherein Y is $C_6$-$C_{20}$-aryl, $C_6$-$C_{20}$-heteroaryl, $C_1$-$C_{20}$-alkoxy, $C_6$-$C_{20}$-aryloxy, $NR''_2$, $-SR''$, $-PR''_3$, $-SiR''_3$, or-$OSiR''_3$;

each of the above mentioned ring moieties alone or as a part of another moiety as the substituent for Cp, X, R" or $R^2$ can further be substituted e.g. with $C_1$-$C_{20}$-alkyl which may contain Si and/or O atoms;

n is 0 or 1.

Suitably, in each X as $-CH_2$-Y, each Y is independently selected from $C_6$-$C_{20}$-aryl, $NR''_2$, $-SiR''_3$ or $-OSiR''_3$. Most preferably, X as $-CH_2$-Y is benzyl. Each X other than $-CH_2$-Y is independently halogen, $C_1$-$C_{20}$-alkyl, $C_1$-$C_{20}$-alkoxy, $C_6$-$C_{20}$-aryl, $C_7$-$C_{20}$-arylalkenyl or $-NR''_2$ as defined above, e.g. -N($C_1$-$C_{20}$-alkyl)$_2$.
Preferably, each X is halogen, methyl, phenyl or $-CH_2$-Y, and each Y is independently as defined above.
Cp is preferably cyclopentadienyl, indenyl, tetrahydroindenyl or fluorenyl, optionally substituted as defined above. More preferably Cp is a cyclopentadienyl or indenyl.
In a suitable subgroup of the compounds of formula (I), each Cp independently bears 1, 2, 3 or 4 substituents as defined above, preferably 1, 2 or 3, such as 1 or 2 substituents, which are preferably selected from $C_1$-$C_{20}$-alkyl, $C_6$-$C_{20}$-aryl, $C_7$-$C_{20}$-arylalkyl (wherein the aryl ring alone or as a part of a further moiety may further be substituted as indicated above), $-OSiR''_3$, wherein R" is as indicated above, preferably $C_1$-$C_{20}$-alkyl.

R, if present, is preferably a methylene, ethylene or a silyl bridge, whereby the silyl can be substituted as defined above, e.g. a (dimethyl)Si=, (methylphenyl)Si=, (methylcyclohexyl)silyl= or (trimethylsilylmethyl)Si=;

n is 0 or 1.

Preferably, R" is other than hydrogen.

A specific subgroup includes the well known metallocenes of Zr, Hf and Ti with two eta5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or $-SiMe_2$. The preparation of the metallocenes can be carried out according or analogously to the methods known from the literature and is within skills of a person skilled in the field. Thus for the preparation see e.g. EP-A-129 368, examples of compounds wherein the metal atom bears a $-NR''_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

To form a catalyst, a cocatalyst is used as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

**Co-agent (i-2)**

According to the present invention the metallocene produced polyethylene copolymer as described above is combined with at least a poly(n)functional acrylate with $n \geq 2$ as co-agent to form a mixture (M).

Said co-agent is a polyfunctional acrylate monomer containing two or more unsaturated groups capable of undergoing radical addition. Suitable examples of co-agents may include di- and tri-(meth)acrylates, such as 1,4-butanediol-dimethacrylate (BDDMA), 1,6-hexanediol-dimethacrylate (HDDMA), 1,3-butyleneglycol-dimethacrylate (BGDMA), ethyleneglycol-dimethacrylate (EGDMA), dodecanediol-dimethacrylate (DDDMA), trimethylolpropane-trimethacrylate (TMPTMA), trimethacrylate ester (TMA ester) and mixtures thereof. Preferably, the co-agent is 1,4-butanediol-dimethacrylate (BDDMA) or trimethylolpropane-trimethacrylate (TMPTMA). More preferably, trimethylolpropane-trimethacrylate (TMPTMA) is used according to present invention.

The poly(n)functional acrylate co-agent with $n \geq 2$, is applied in amounts between 0.05 wt% and 1.0 wt%, preferably between 0.10 and 0.90 wt%, more preferably between 0.15 and 0.70 wt% and most preferably between 0.20 and 0.50 wt%, based on the total weight of the mixture (M).

**Radical Initiator (i-3)**

In an embodiment of the present invention, the metallocene produced polyethylene copolymer as described above can be furthermore, in addition to the at least a poly(n)functional acrylate with $n \geq 2$ as co-agent, combined with an optional radical initiator to form the mixture (M). The optional radical initiator acts as free radical generator.

Preferably, the free radical generator is an organic peroxide, which is selected from the group consisting of diacyl peroxides, dialkyl peroxides, peroxyketals, peroxyesters, peroxycarbonates, and mixtures thereof.

Specific examples of these include benzoyl peroxide, dichlorobenzoyl peroxide, dicumyl peroxide, di-tert-butyl peroxide, 2,5-dimethyl-2,5-di(peroxybenzoato)-3-hexene, 1,4-bis(tert-butylperoxyisopropyl)benzene, lauroylperoxide, tert-butyl peracetate, $\alpha,\alpha'$-bis(tert-butylperoxy)diisopropylbenzene, 2,5-dimethyl-2,5-di(tert-butylperoxy)-3-hexene, 2,5-dimethyl-2,5-di(tert-butylperoxy)-hexane, tert-butylperoxybenzoate, tert-butyl perphenylacetate, di-tert-amylperoxide, butyl-4,4-bis(tert-butylperoxy)-valerate, 1,1-bis(tert-butylperoxy)-3,3,5-trimethylcyclohexane, and any combination thereof.

Preferably, a dialkyl peroxides is employed in the process according to the present invention. More preferably, the organic peroxide is 2,5-dimethyl-2,5-di(tert-butylperoxy)hexane.

The radical initiator, preferably the organic peroxide, may be applied in amount 0.00 to 1.0 wt%, preferably 0.00 to 0.8, more preferably 0.00 to 0.5 wt%, based on the total weight of the mixture (M).

The person skilled in the art knows how to choose an appropriate peroxide that will thermally decompose during the reactive modification process according to the present invention.

The radical initiator, preferably the organic peroxide, may be used in the form of a masterbatch wherein the radical initiator is fed as a pre-mix (masterbatch). Preferably, the radical initiator is pre-mixed with a carrier which can be a polymer, e.g. polyethylene or polypropylene, or other materials, e.g. silica or CaCO3, forming a masterbatch, which is then fed into an extruder. The wt% of radical initiator above refers to the wt% of the actual initiator not the wt% of

masterbatch.

**Process for modification**

The process of the invention requires that the polyethylene copolymer (i-1) is contacted with at least a co-agent (i-2) and optionally a radical initiator (i-3) in an extruder.

A variety of additives can be added to the mixture (M) before, during or after the extrusion (compounding) step. Examples of these additives comprise nucleating agents, stabilizers, inorganic fillers, e.g. talc, pigments, surface tension modifiers, lubricants, heat stabilisers, flame-retardants, antioxidants, dyes, plasticizers, antistatic agents, reinforcing agents, or the like. The skilled person can readily select any suitable combination of additives and additive amounts without undue experimentation.

The various components (i-1), (i-2), optional (i-3) and optional one or more additives used in the process of the invention may be combined using any means known in the art and in any order in order to obtain modified polyethylene copolymer.

The sum of all components added in the process of the invention should add up to 100 wt%. Some or all of the components can be pre-mixed in a conventional mixing device at ambient temperature prior to introduction to an extruder or can be melt-mixed directly in the extruder by their addition, in any order and by any conventional means, at different sites of the extruder. It will be appreciated that the mixture (M) in step (i) can be formed before the mixture (M) is added to the extruder or formed within the extruder as components of the mixture (M) are added into the extruder via separate channels.

Preferably, the co-agent (i-2) is soaked with the polyethylene copolymer (i-1) to yield the mixture (M), which is then introduced into the extruder. If a radical initiator (i-3) is also added, the radical initiator as such or in the form of a masterbatch is then preferably added into the extruder via a separate channel.

*Extrusion Device / Extruder*

The process according to the present invention is suitably carried out in melt mixing equipment known to a person skilled in the art. Preferably, an extrusion device, also referred to as an extruder, or kneader is used. The streams of the polyethylene copolymer (i-1), the co-agent (i-2) and the optional radical initiator (i-3) are suitably passed to the extruder simultaneously or in a preferred manner components (i-1) and (i-2) are pre-mixed, i.e. the co-agent (i-2) soaked with the polyethylene copolymer (i-1), and then added to the extruder. In case a radical initiator (i-3) is added, this is the preferably added simultaneously via a separate channel into the extruder.

The extruder may be any extruder known in the art. The extruder may thus be a single screw extruder, a twin screw extruder, such as a co-rotating twin screw extruder or a counter-rotating twin screw extruder, or a multi-screw extruder, such as a ring extruder. Furthermore, the extruder may be an internal mixer, such as a Banbury type mixer, a counter-rotating continuous intensive mixer (CIM), or a special single screw mixer, such as the Buss co-kneader or a TriVolution kneader. A static mixer, such as Kenics, Koch, etc., can also be used in addition to the extruder units mentioned above, in order to improve the distributive mixing with comparatively low heat generation. Especially preferably, the extruder is a co-rotating twin screw extruder or a continuous intensive mixer (CIM). Examples of suitable extruders according to the present invention include those supplied by Coperion Werner & Pfleiderer, Berstorff, Japan Steel works, Kobe Steel, and Farrel.

The extruder typically comprises a feed zone, a melting zone, a mixing zone and a die zone.

Further, the melt pressed through the die is typically solidified and cut to pellets in a pelletiser.

The screw speed of the extruder is preferably 140 rpm to 450 rpm, more preferably 170 rpm to 400 rpm and even more preferably 190 rpm to 380 rpm. The residence time of the polyethylene copolymer in the extrusion device / extruder may vary within wide limits; usually the residence time is at least 25, preferably at least 30 sec, e.g. 25 to 75 secs, and more preferably about 35 seconds.

The temperature in the extruder is greater than the melting temperature of the polyethylene copolymer and, in case a radical initiator is present, at a temperature above the initiation temperature of the initiator.

The temperature needs to be less than the decomposition temperature of the polyethylene copolymer. Suitably, the temperature is from about 5°C greater than the melting temperature of the polyethylene copolymer, preferably from about 10°C greater than the melting temperature of the polyethylene copolymer to preferably about 280°C, more preferably to about 250°C and especially preferably to about 240°C. For instance, the temperature should be preferably in the range of from 165°C to 280°C, more preferably in the range of from 170°C to 250°C, like in the range of from 180°C to 240°C, and even more preferably between 180°C and 230°C.

**Modified polyethylene copolymer**

The polyethylene copolymer that exits the extruder is called the modified polyethylene copolymer herein. It will be converted into pellets comprising the modified polyethylene by a pelletiser after the extrusion process.

The modified polyethylene copolymer is characterised by the correlation between the final melt flow rate (ISO1133, 2.16 kg, 190°C) ($MFR_2$ pellets) and the starting melt flow rate ($MFR_2$ starting) (ISO1133, 2.16 kg, 190°C). The reduction achieved is linked to the co-agent (i-2) and optional radical initiator (i-3) content. The more co-agent (i-2) and optional radical initiator (i-3), the more the $MFR_2$ is reduced.

The final melt flow rate (ISO1133, 2.16 kg, 190°C) of the pellets ($MFR_2$ pellets) produced by the process of the invention is usually in the range of from 0.001 to 4.0 g/10min, preferably from 0.01 to 2.0 g/10min, more preferably from 0.05 to 1.0 g/10min, and even more preferably from 0.10 to 0.80 g/10min. It will be appreciated, that this MFR is measured in the presence of any optional additives present. These have no material effect on the measured MFR.

The ratio of the $MFR_2$ (pellets)/$MFR_2$ (starting) is 0.60 or less, preferably 0.50 or less, more preferably 0.40 or less.

It is thus preferred that the $MFR_2$ of the starting polyethylene copolymer is reduced by at least 50% during the extrusion process.

Preferably, the pellets comprising the modified polyethylene copolymer obtained from the process of the present invention have a gel content characterized by xylene hot insoluble content (XHU) of 0.1 wt% or less, preferably 0.05 wt% or less.

More preferably, the pellets comprising the modified polyethylene copolymer contain no measurable xylene hot insoluble (XHU) content.

Viewed from another aspect the invention provides the use of a poly(n)functional acrylate with $n \geq 2$ as co-agent to reduce the $MFR_2$ of metallocene produced polyethylene copolymer by at least 50%, wherein the gel content measured as XHU of said polyethylene copolymer after treatment with said co-agent is less than 0.1 wt%.

The pellets comprising the modified polyethylene copolymer furthermore have a $F_{30}$ melt strength >10.5 cN as measured according to ISO 16790:2005 at a die pressure of 30 bar.

Preferably, the $F_{30}$ melt strength is at least 11.0 cN up to 20cN, more preferably at least 11.4 cN up to 16 cN.

In a further embodiment of the invention, the pellets comprising the modified polyethylene copolymer obtained from the process of the present invention show a max. draw down velocity $v_{max}$ of at least 180 mm/s, preferably of at least 185 mm/s and more preferably of at least 190 mm/s, like at least 195 mm/s.

The pellets comprising the modified polyethylene copolymer obtained from the process of the present invention hereby show a max. draw down velocity $v_{max}$ on the same level as the starting material, whereas in case only a radical initiator is used to modify the polyethylene copolymer, this max. draw down velocity $v_{max}$ is significantly lower compared to the starting material.

The modified polyethylene copolymer of the invention may be used to form a variety of final articles such as pipes, mouldings or films. It is most preferred if the modified polyethylene of the invention is used to form a film.

**Films**

Films comprising the modified polyethylene copolymer of the invention can be produced with several known conversion techniques, such as extrusion via blown or cast film technology, wherein blown films are preferred.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

The films according to the present invention typically have a thickness of 100 $\mu$m or below, such as 10 $\mu$m to 80 $\mu$m, e.g. 20 to 60 $\mu$m.

Films according to the present invention may be mono- or multilayer films, comprising one or more layers, like two, three or five layers, even up to seven, up to 9 or up to 12 layers. The modified polyethylene copolymer of the invention may be present in one or more layers of the film.

It is further within the scope of the present invention, that any film layer may comprise at least 60 wt%, preferably at least 70 wt%, more preferably at least 80 wt% and even more preferred at least 85 wt% of the modified polyethylene copolymer of the invention.

It is within the scope of the present invention that the modified polyethylene copolymer may be combined with additives, such as phenolic stabilizers, antioxidants, slip and antistatic agents, antiblock agents processing aids, colorants and the like.

The modified polyethylene copolymer may also be combined with other polymer components, e.g. low density polyethylene (LDPE), preferably a low density polyethylene produced in a high pressure process.

The LDPE preferably has a density (ISO1183) in the range of 910 to 940 kg/$m^3$, more preferably in the range of 915 to 935 kg/$m^3$, still more preferably in the range of 918 to 930 kg/$m^3$.

Further it is preferred that the LDPE has a melt flow rate $MFR_2$ (ISO1133, 2.16 kg, 190°C) in the range of from 0.05 to 2.0 g/10min, more preferably in the range of from 0.10 to 1.8 g/10min, and even more preferably in the range of from 0.15 to 1.5 g/10 min.

Accordingly, one example of such a low density polyethylene (LDPE) is the commercial product FT5230 of Borealis AG ($MFR_2$: 0.75g/10min; Density: 923kg/$m^3$).

In an embodiment of the present invention, the modified polyethylene copolymer is therefore combined with 0.0 to 40.0 wt%, preferably 5.0 to 30.0 wt% and more preferably 8.0 to 20.0 wt%, of a low density polyethylene (LDPE).

Films of the invention may be characterized by a high Dart-drop strength (DDI), according to ASTM D1709, method A,

of at least 380 g up to 1700 g, preferably in the range of 400 to 1200 g, and more preferably in the range of 450 to 1000 g, when measured on a 40 micron blown film.

It is within the scope of the invention that the films are, additionally or alternatively, characterized by a tensile modulus in machine direction measured according to ISO 527-3 on a 40 micron blown film of at least 150 MPa, preferably at least 180 MPa, e.g. 150 to 300 MPa, and by a tensile modulus in transverse direction of at least 200 MPa, preferably at least 220 MPa, e.g. 200 to 400 MPa.

For packaging companies it is of utmost importance to reduce the sealing initiation temperature (SIT) of a packaging film. Even more in the view of a sustainable and circular approach, low sealing temperature and high hot tack force (HTF) are required. Lower SIT and higher HTF allows running the packaging lines faster and/or at lower temperatures, thus saving costs and energy.

Thus, one further embodiment of the present invention stipulates that the sealing initiation temperature determined on a blown film with a thickness of 40 $\mu$m is in the range of 80°C to below 110°C, preferably in the range of 85°C to 100°C and more preferably in the range of 88°C to 96°C.

Additionally, the low SIT of such a film is preferably combined with a high hot tack force determined on a blown film with a thickness of 40 $\mu$m is in the range of 2.5 N to 5.0 N, preferably in the range of 2.8 to 4.8 N and more preferably in the range of 3.0 to 4.5 N.

The films according to the present invention are highly useful for being used in various packaging applications, wherein applications related to food packaging are preferred. Films comprising the modified polyethylene copolymer of the current invention comprise shrink films, collation shrink films, wrap films, lamination films, etc..

Packaging articles comprising the multimodal copolymer of the current invention comprise bags, pouches, wrapping or collation films, and the like.

The invention will be further described with reference to the following non-limiting examples.

## METHODS

The following definitions of terms and determination methods apply for the above general description of the invention as well as to the below examples unless otherwise defined.

### Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190°C for polyethylene. MFR may be determined at different loadings such as 2.16 kg ($MFR_2$), 5 kg ($MFR_5$) or 21.6 kg ($MFR_{21}$).

### Density

Density of the polyethylene was measured according to ISO 1183-1:2004 (method A) on compression moulded specimen prepared according to EN ISO 1872-2 (Feb 2007) and is given in kg/$m^3$.

### Comonomer contents: Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg

of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^{1}H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_*$B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *ββB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

klimke06: Klimke, K., Parkinson, M., Piel, C., Kaminsky, W., Spiess, H.W., Wilhelm, M., Macromol. Chem. Phys. 2006;207:382.
parkinson07: Parkinson, M., Klimke, K., Spiess, H.W., Wilhelm, M., Macromol. Chem. Phys. 2007;208:2128.
pollard04: Pollard, M., Klimke, K., Graf, R., Spiess, H.W., Wilhelm, M., Sperber, O., Piel, C., Kaminsky, W., Macromolecules 2004;37:813.
filip05: Filip, X., Tripon, C., Filip, C., J. Mag. Resn. 2005, 176, 239
griffin07: Griffin, J.M., Tripon, C., Samoson, A., Filip, C., and Brown, S.P., Mag. Res. in Chem. 2007 45, S1, S198
castignolles09 : Castignolles, P., Graf, R., Parkinson, M., Wilhelm, M., Gaborieau, M., Polymer 50 (2009) 2373

busico01: Busico, V., Cipullo, R., Prog. Polym. Sci. 26 (2001) 443
busico97: Busico, V., Cipullo, R., Monaco, G., Vacatello, M., Segre, A.L., Macromoleucles 30 (1997) 6251
zhou07: Zhou, Z., Kuemmerle, R., Qiu, X., Redwine, D., Cong, R., Taha, A., Baugh, D. Winniford, B., J. Mag. Reson. 187 (2007) 225
busico07: Busico, V., Carbonniere, P., Cipullo, R., Pellecchia, R., Severn, J., Talarico, G., Macromol. Rapid Commun. 2007, 28, 1128
resconi00 : Resconi, L., Cavallo, L., Fait, A., Piemontesi, F., Chem. Rev. 2000, 100, 1253

**Differential Scanning Calorimetry (DSC)**

Experiments were performed with a TA Instruments Q200, calibrated with Indium, Zinc, Tin and according to ISO 11357-3. Roughly 5 mg of material were placed in a pan and tested at 10°C/min throughout the experiments, under 50 mL/min nitrogen flow, with lower and higher temperatures of -30°C and 180°C respectively. Only the second heating run was considered for the analysis. The melting temperature Tm is defined as the temperature of the main peak of the thermogram, while the melting enthalpy ($\Delta$Hm) is calculated by integrating between 10°C and the end of the thermogram, typically Tm+15°C. The running integral in this range is also calculated.

**XHU**

About 2 g of the polyethylene (mp) were weighed and put in a mesh of metal and the combined weight of the polyethylene and the mesh was determined (mp+m). The polyethylene in the mesh was extracted in a Soxhlet apparatus with boiling xylene for 5 hours. The eluent was then replaced by fresh xylene and the boiling was continued for another hour. Subsequently, the mesh was dried and weighed again for obtaining the combined mass of hot xylene insoluble polymer / polyethylene (XHU) and the mesh (mXHU+m). The mass of the xylene hot insoluble polymer / polyethylene (mXHU) obtained by the formula (mXHU+m) - m = mXHU was put in relation to the weight of the polymer / polyethylene (mp) to obtain the fraction of xylene insoluble polymer / polyethylene mXHU/mp. This fraction of xylene insoluble polymer/ polyethylene was then taken as the gel content.

**Haze**

Haze was measured according to ASTM D1003 on 40 micron blown films.

**Sealing initiation temperature (SIT); sealing end temperature (SET), sealing range:**

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of > 5 N is achieved. The upper limit (sealing end temperature (SET)) is reached, when the films stick to the sealing device.

The sealing range was determined on a J&B Universal Sealing Machine Type 4000 with a blown film of 40 $\mu$m thickness with the following further parameters:

Specimen width: 25.4 mm
Seal Pressure: 0.1 N/mm$^2$
Seal Time: 0.1 sec
Cool time: 99 sec
Peel Speed: 10 mm/sec
Start temperature: 80 °C
End temperature: burn through
Increments: 5 °C

**Hot-tack force**

The hot-tack force was determined according to ASTM F1921-12 - Method B on a J&B Hot-Tack Tester on a 40 $\mu$m thick blown film. All film test specimens were prepared in standard atmospheres for conditioning and testing at 23 °C ($\pm$ 2 °C) and 50 % ($\pm$ 10 %) relative humidity. The minimum conditioning time of test specimen in standard atmosphere before start testing is at least 16 h. The minimum storage time between extrusion of film sample and start testing is at least 88 h. The hot-tack measurement determines the strength of heat seals formed in the films, immediately

after the seal has been made and before it cools to ambient temperature. The hot-tack measurement was performed under the following conditions:

Film Specimen width: 25.4 mm
Seal bar length: 50 mm
Seal bar width: 5 mm
Seal bar shape: flat
Seal Pressure: 0.3 $N/mm^2$
Seal Time: 0.5sec
Cool time: 99 sec
Peel Speed: 200 mm/sec
Start temperature: 50 °C
End temperature: 140 °C
Increments: 10 °C

The hot-tack force was measured as a function of temperature within the temperature range and with temperature increments as indicated above. The number of test specimens were at least 3 specimens per temperature. The Hot-tack force is evaluated as the highest force (maximum peak value) with failure mode "peel".

**Dart drop strength (DDI)**

Dart-drop was measured using ASTM D1709, method A (Alternative Testing Technique) from the film samples. A dart with a 38 mm diameter hemispherical head was dropped from a height of 0.66 m onto a film clamped over a hole. Successive sets of twenty specimens were tested. One weight was used for each set and the weight was increased (or decreased) from set to set by uniform increments. The weight resulting in failure of 50 % of the specimens was calculated and reported.

$DDI_{40}$ denominates the Dart Drop Impact determined on a 40 μm blown film.

**Tensile modulus on films**

Tensile moduli in machine (MD)/transverse (TD) direction were determined acc. to ISO 527-3 on blown films with a thickness of 40 μm at a cross head speed of 1 mm/min.

**Rheotens test ($F_{30}$, $V_{max}$)**

The test described herein follows ISO 16790:2005.

The strain hardening behaviour was determined by the method as described in the article "Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (UD = 6.0/2.0 mm). The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand (2) drawn down is 120 mm/sec2. The Rheotens was operated in combination with the PC program EXTENS. This is a real-time data-acquisition program, which displays and stores the measured data of tensile force and drawdown speed. The end points of the Rheotens curve (force versus pulley rotary speed) is taken as the melt strength and drawability values.

**Inventive Example 1 and 2, Comparative Example 1 and 2**

*Metallocene catalyst*

130 grams of a metallocene complex bis(1-methyl-3-n-butylcyclopentadienyl) zirconium (IV) dichloride (CAS no. 151840-68-5) and 9.67 kg of a 30% solution of commercial methylalumoxane (MAO) in toluene were combined and 3.18 kg dry purified toluene was added. Thus, obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

*Base polymer (LLDPE base)*

The polyethylene copolymer (LLDPE) used in the Examples was obtained via the following process, i.e. in a Borstar pilot plant comprising a prepolymerization step - loop - loop - gas phase reactor cascade, as described inter alia in WO 2016/198273.

It is a multimodal LLDPE terpolymer comprising first and second copolymer components (A) and (B), wherein the first copolymer component (A) comprises two fractions (A-1) and (A-2).

**Table 1**

| Prepoly reactor | |
|---|---|
| Temp. (°C) | 50.0 |
| Pressure (kPa) | 5591.0 |
| C2 (kg/h) | 4.0 |
| C4 (g/h) | 150.0 |
| H2 (g/h) | 0.05 |
| loop reactor 1 | Component (A) fraction (A-1) |
| Temp. (°C) | 85.0 |
| Pressure (kPa) | 5530.6 |
| C2 conc. (mol%) | 2.5 |
| H2/C2 ratio (mol/kmol) | 0.4 |
| C4/C2 ratio (mol/kmol) | 100.8 |
| split (wt%) | 18.3 |
| Density (kg/m$^3$) | 939.5 |
| $MFR_2$ (g/10 min) | 7.0 |
| loop reactor 2 | Component (A) fraction (A-2) |
| Temp. (°C) | 85.0 |
| Press. (kPa) | 5343.2 |

| | |
|---|---|
| C2 conc. (mol%) | 2.6 |
| H2/C2 ratio (mol/kmol) | 0.1 |
| C4/C2 ratio (mol/kmol) | 95.2 |
| Split (wt%) | 20.3 |
| Density ($kg/m^3$) total component (A) | 938.9 |
| $MFR_2$ (g/10 min) | 6.4 |
| Density of fraction (A-2) | 938.3 |
| $MFR_2$ of fraction (A-2) | 5.8 |
| C4 content of component (A) total (mol%) | 0.48 |
| GPR | Component (B) |
| Temp. (°C) | 75.0 |
| Press. (kPa) | 2000.3 |
| H2/C2 ratio (mol/kmol) | 0.2 |
| C6/C2 ratio (mol/kmol) | 27.7 |
| split (wt)% | 58.2 |
| Density of component (B) | 903.8 |
| $MFR_2$ of component (B) | 0.6 |
| C6 content component (B) (mol%) | 4.3 |
| Mixer powder | |
| Density ($kg/m^3$) | 918.5 |
| $MFR_2$ (starting) (g/10 min) | 1.6 |
| C4 total (mol%) | 0.2 |
| C6 total (mol%) | 2.5 |
| Tm (°C) | 123 |
| Hm (J/g) | 99 |

The powder as produced as described above was used as the base polymer.

The base polymer was combined with one or more of the following components to form the mixture (M):

TMPTMA: Trimethlyolpropane trimethacrylate, technical grade, purchased from SigmaAldrich and used directly
POX5: peroxide masterbatch with 5 wt% 2,5-Dimethyl-2,5-di(tert-butylperoxy)hexane (commercial name Trigonox 101, produced and supplied by Nouryon Polymer chemistry)

Antioxidant used was Irganox® B 215, produced and supplied by BASF.

As acid scavenger Calcium Stearate was used, it has the commercial name CEASIT FI, produced and supplied by Bärlocher.

The recipes are listed in Table 2. For the inventive Examples, TMPTMA was soaked with the base polymer. For soaking, desired amount of base polymer powder and TMPTMA was added to an intensive mixer and mixed at room temperature intensively to achieve homogeneous mixing. Then the mixture was discharged to a closed container and

further stored at room temperature for at least 12h to let the TMPTMA diffuse in to base polymer powder homogeneously.

Each recipe was compounded on a ZSK 18 twin screw extruder. The throughput was 7 kg/h and melt temperature was fixed at 210°C. The POX and other additives were feeded via separated feeder. Final properties are reported in Table 2.

**Table 2: Recipe and properties**

| | | CE1 | IE1 | IE2 | CE2 |
|---|---|---|---|---|---|
| LLDPE base polymer | wt% | 99.8 | 99.5 | 99.1 | 99.4 |
| Antioxidant | wt% | 0.15 | 0.15 | 0.15 | 0.15 |
| Acid scavenger | wt% | 0.05 | 0.05 | 0.05 | 0.05 |
| TMPTMA | wt% | 0 | 0.3 | 0.3 | 0 |
| POX5 | wt% | 0 | 0 | 0.4 | 0.4 |
| $MFR_2$ (starting) | g/10min | 1.6 | 1.6 | 1.6 | 1.6 |
| $MFR_2$ (pellets) | g/10min | 1.6 | 0.63 | 0.41 | 0.64 |
| Ratio $MFR_2$ (pellets/starting) | n.a. | 1 | 0.39 | 0.26 | 0.40 |
| XHU | wt% | 0 | 0 | 0 | 0 |
| $F_{30}$ | cN | 8.0 | 11.6 | 14.1 | 10.3 |
| $V_{max}$ | mm/s | 201 | 199 | 198 | 178 |

As can be seen, in the comparative example, the peroxide reduces the $MFR_2$ and increases $F_{30}$, but lowers the extensibility ($V_{max}$) compared to the base polymer.

Inventive Example 1 (IE1) shows that using TMPTMA alone, reduces the $MFR_2$ like the peroxide, but increases $F_{30}$ to a higher extend whilst keeping the extensibility ($V_{max}$) on the same level as for the base polymer.

Using a combination of TMPTMA and peroxide, as was done in Inventive Example 2 (IE2) further improves the performance, i.e. further decreases the $MFR_2$, further increases $F_{30}$ and maintaining $V_{max}$ on the same level as for the base polymer.

Gels are essentially not detectable.

**Films**

CE1 and IE1 were further used for film tests. The films were produced on a Collin 30 lab scale blown film line, with 40 μm thickness and 1:2.5 BUR, the melt temperature was 186°C, uptake speed 7.6m/min. The materials were pre-blended with 10 wt% of LDPE (FT5230).

**FT5230:** low density polyethylene, commercially available by Borealis AG (Austria), density 923 kg/$m^3$ (determined according to ISO1183), Melt Flow Rate (190°C/2.16 kg, ISO 1133) of 0.75 g/10min and melting temperature (determined by DSC according to ISO 11357/03) of 112°C.

The film results are shown in Table 3.

**Table 3: Film properties**

| Base polymer | | 90 wt% CE1 | 90 wt% IE1 |
|---|---|---|---|
| LDPE | | 10 wt% | 10 wt% |
| Tensile Modulus/MD | MPa | 204 | 199 |
| Tensile Modulus/TD | MPa | 226 | 230 |
| Dart drop impact ($DDI_{40}$) | g | 361 | 461 |
| Seal initiation temperature | °C | 94 | 94 |
| Hot-tack force | N | 2.8 | 3.1 |

As can be seen, compared to CE, the IE has improved properties: the DDI is much higher with same stiffness and hot-tack force is increased.

## Claims

1. A process for the reduction of the $MFR_2$ (ISO1133, 2.16 kg, 190°C) of a polyethylene comprising the following steps:

    (i) forming a mixture (M) by combining

    (i-1) a metallocene produced polyethylene copolymer having an $MFR_2$ (starting) of 0.5 to 10.0 g/10min (ISO1133, 2.16 kg, 190°C) and a density from 910 to 945 kg/$m^3$ (ISO1183) with (i-2) 0.05 to 1.0 wt%, based on the total weight of the mixture (M), of a poly(n)functional acrylate, with $n \geq 2$, as co-agent and optional with (i-3) a radical initiator;

    (ii) extruding the mixture (M) of step (i) at a temperature above the melting point of the polyethylene copolymer and, in case a radical initiator (i-3) is present, at a temperature above the initiation temperature of the initiator to yield a modified polyethylene copolymer in the form of pellets;
    wherein said pellets have a density of 910 to 945 kg/$m^3$ (ISO1183),
    a xylene insoluble content (XHU, determined as described in the experimental part) of below 0.1 wt%,
    an $MFR_2$ (pellets) of 0.001 to 4.0 g/10min (ISO1133, 2.16 kg, 190°C) and wherein the $MFR_2$ (pellets) is lower than $MFR_2$ (starting) such that $MFR_2$ (pellets)/$MFR_2$ (starting) is 0.60 or less and
    a $F_{30}$ melt strength >10.5 cN as measured according to ISO 16790:2005 at a die pressure of 30 bar.

2. The process according to claim 1, wherein the poly(n)functional acrylate is a di- or tri-(meth)acrylate selected from the group consisting of 1,4-butanediol-dimethacrylate (BDDMA), 1,6-hexanediol-dimethacrylate (HDDMA), 1,3-butyleneglycol-dimethacrylate (BGDMA), ethyleneglycol-dimethacrylate (EGDMA), dodecanediol-dimethacrylate (DDDMA), trimethylolpropane-trimethacrylate (TMPTMA), trimethacrylate ester (TMA ester) and mixtures thereof.

3. The process according to claim 2, wherein the poly(n)functional acrylate preferably is 1,4-butanediol-dimethacrylate (BDDMA) or trimethylolpropane trimethacylate (TMPTMA), more preferably trimethylolpropane trimethacylate (TMPTMA).

4. A process as claimed in any preceding claims wherein the mixture (M) in step (i) comprises 0.00 to 1.0 wt%, preferably 0.00 to 0.8, more preferably 0.00 to 0.5 wt% based on the total weight of the mixture (M) of a radical initiator (i-3).

5. A process as claimed in claim 4, wherein the free radical generator is an organic peroxide, which is selected from the group consisting of diacyl peroxides, dialkyl peroxides, peroxyketals, peroxyesters, peroxycarbonates, and mixtures thereof.

6. A process as claimed in any preceding claim wherein the polyethylene copolymer (i-1) in step (i) is in the form of a powder and/or wherein the mixture is extruded at a temperature in the range of from 165°C to 280°C, preferably in the range of from 170°C to 250°C, more preferably in the range of from 180°C to 240°C, and even more preferably in the range of from 180°C and 230°C.

7. A process as claimed in any preceding claim wherein the polyethylene copolymer (i-1) in step (i) is a terpolymer.

8. A process as claimed in claim 7, wherein the polyethylene copolymer (i-1) in step (i) is a multimodal polyethylene terpolymer, which comprises a first copolymer component (A) of ethylene and an alpha-olefin comonomer having from 4 to 10 carbon atoms and a second copolymer component (B) of ethylene and an alpha-olefin comonomer having from 6 to 10 carbon atoms, wherein the first copolymer component (A) comprises at least a first and a second fraction (A-1 and A-2), preferably consists of first fraction (A-1) and second fraction (A-2).

9. A modified polyethylene obtained by a process according to any of the claims 1 to 8, wherein the modified polyethylene is in the form of pellets.

10. The modified polyethylene according to claim 9, wherein the final melt flow rate of the pellets ($MFR_2$ pellets) preferably is in the range of from 0.01 to 2.0 g/10min, more preferably from 0.05 to 1.0 g/10min, and even more preferably

from 0.10 to 0.80 g/10min and/or the ratio of the $MFR_2$ (pellets)/$MFR_2$ (starting) preferably is 0.50 or less, more preferably 0.40 or less.

**11.** The modified polyethylene according to claim 9 or 10, wherein the pellets comprising the modified polyethylene copolymer preferably have a $F_{30}$ melt strength, as measured according to ISO 16790:2005 at a die pressure of 30 bar, of at least 11.0 cN up to 20cN, more preferably at least 11.4 cN up to 16 cN and/or show a max. draw down velocity $v_{max}$, as measured according to ISO 16790:2005 at a die pressure of 30 bar, of at least 180 mm/s, preferably of at least 185 mm/s and more preferably of at least 190 mm/s, like at least 195 mm/s.

**12.** Use of a poly(n)functional acrylate with $n \geq 2$ as co-agent to reduce the $MFR_2$ (ISO1133, 2.16 kg, 190°C) of metallocene produced polyethylene copolymer having an $MFR_2$ (starting) of 0.5 to 10.0 g/10min (ISO1133, 2.16 kg, 190°C) and a density from 910 to 945 kg/$m^3$ (ISO1183) by at least 50%, wherein the gel content measured as XHU of said polyethylene copolymer after treatment with said co-agent is less than 0.1 wt%.

**13.** A blown film comprising the modified polyethylene according to claim 9 to 11 and 0.0 to 40.0 wt%, preferably 5.0 to 30.0 wt%, more preferably 8.0 to 20.0 wt%, of an LDPE, wherein the blown film is **characterized by**
a dart-drop impact strength (DDI) determined according to ASTM D1709, method A on a 40 μm monolayer blown film of at least 380 g up to 1700 g, preferably in the range of 400 to 1200 g, and more preferably in the range of 450 to 1000 g.

**14.** The blown film according to claim 13, wherein the LDPE preferably is a low density polyethylene produced in a high pressure process, having a density (ISO1183) in the range of 910 to 940 kg/$m^3$, more preferably in the range of 915 to 935 kg/$m^3$, still more preferably in the range of 918 to 930 kg/m3 and a melt flow rate $MFR_2$ (ISO1133, 2.16 kg, 190°C) in the range of from 0.05 to 2.0 g/10min, more preferably in the range of from 0.10 to 1.8 g/10min, and even more preferably in the range of from 0.15 to 1.5 g/10 min.

**15.** The blown film according to claim 13 or 14, wherein the blown film is **characterized by** a sealing initiation temperature (SIT) determined on a blown film with a thickness of 40 μm (as described in the experimental part) in the range of 80°C to below 110°C, preferably in the range of 85°C to 100°C and more preferably in the range of 88°C to 96°C and a hot tack force determined on a blown film with a thickness of 40 μm (as described in the experimental part) in the range of 2.5 N to 5.0 N, preferably in the range of 2.8 to 4.8 N and more preferably in the range of 3.0 to 4.5 N.

## Patentansprüche

**1.** Ein Verfahren zum Reduzieren der Schmelzflussrate ($MFR_2$) (ISO1133, 2,16 kg, 190°C) eines Polyethylens, das die folgenden Schritte umfasst:

(i) Bilden einer Mischung durch das Kombinieren

(i-1) eines Metallocen-erzeugten Polyethylen-Copolymers mit einer $MFR_2$ (Beginn) von 0,5 bis 10,0 g/10min (ISO1133, 2,16 kg, 190°C) und einer Dichte von 910 bis 945 kg/$m^3$ (ISO1183) mit (i-2) 0,05 bis 1,0 Gewichtsprozent basierend auf dem Gesamtgewicht der Mischung (M) eines poly(n)funktionalen Acrylats, wobei $n \geq 2$, als Koagens,
und optional mit (i-3) einem Radikalinitiator,

ii) Extrudieren der Mischung (M) von Schritt (i) bei einer Temperatur über dem Schmelzpunkt des Polyethylen-Copolymers, und wenn ein Radikalinitiator (i-3) vorhanden ist, bei einer Temperatur über der Initiationstemperatur des Initiators, um ein modifiziertes Polyethylen-Copolymer in der Form von Pellets zu erhalten,
wobei die Pellets eine Dichte von 910 bis 945 kg/$m^3$ (ISO1183) aufweisen,
wobei der xylolunlösliche Anteil (XHU, bestimmt wie in dem experimentellen Abschnitt beschrieben) unter 0,1 Gewichtsprozent liegt,
wobei die $MFR_2$ (Pellets) von 0,001 bis 4,0 g/10min (ISO1133, 2,16 kg, 190°C) beträgt und wobei die $MFR_2$ (Pellets) niedriger als die $MFR_2$ (Beginn) ist, sodass $MFR_2$ (Pellets)/$MFR_2$ (Beginn) 0,60 oder kleiner ist, und wobei die $F_{30}$-Schmelzfestigkeit, gemessen gemäß ISO 16790:2005 bei einem Formdruck von 30 bar, > 10,5 cN ist.

**2.** Verfahren nach Anspruch 1, wobei das poly(n)funktionale Acrylat ein Di- oder Tri(meth)acrylat ist, das aus der

Gruppe ausgewählt ist, die 1,4-Butandiol-Dimethacrylat (BDDMA), 1,6-Hexandiol-Diemethacrylat (HDDMA), 1,3-Butylenglykol-Dimethacrylat (BGDMA), Ethylenglykol-Dimethacrylat (EGDMA), Dodecandiol-Dimethacrylat (DDDMA), Trimethylolpropan-Trimethacrylat (TMPTMA), Trimethacrylatester (TMA-Ester) und Mischungen aus diesen umfasst.

**3.** Verfahren nach Anspruch 2, wobei das poly(n)funktionale Acrylat vorzugsweise 1,4-Butandiol-Dimethacrylat (BDDMA) oder Trimethylolpropan-Trimethacrylat (TMPTMA) und noch besser Trimethylolpropan-Trimethacrylat (TMPTMA) ist.

**4.** Verfahren nach einem der vorstehenden Ansprüche, wobei die Mischung (M) in Schritt (i) 0,00 bis 1,0 Gewichtsprozent, vorzugsweise 0,00 bis 0,8 Gewichtsprozent und noch besser 0,00 bis 0,5 Gewichtsprozent basierend auf dem Gesamtgewicht der Mischung (M) eines Radikalinitiators (i-3) ausmacht.

**5.** Verfahren nach Anspruch 4, wobei der freie Radikalinitiator ein organisches Peroxid ist, das aus der Gruppe ausgewählt ist, die Diacylperoxide, Dialkylperoxide, Peroxyketale, Peroxyester, Peroxycarbonate und Mischungen aus diesen umfasst.

**6.** Verfahren nach einem der vorstehenden Ansprüche, wobei das Polyethylen-Copolymer (i-1) in dem Schritt (i) die Form eines Pulvers aufweist und/oder wobei die Mischung bei einer Temperatur im Bereich von 165°C bis 280°C, vorzugsweise im Bereich von 170°C bis 250°C, noch besser im Bereich von 180°C bis 240°C und noch besser im Bereich von 180°C bis 230°C extrudiert wird.

**7.** Verfahren nach einem der vorstehenden Ansprüche, wobei das Polyethylen-Copolymer (i-1) in Schritt (i) ein Terpolymer ist.

**8.** Verfahren nach Anspruch 7, wobei das Polyethylen-Copolymer (i-1) in Schritt (i) ein multimodales Polyethylenterpolymer ist, das eine erste Copolymerkomponente (A) aus Ethylen und einem Alphaolefin-Comonomer mit 4 bis 10 Kohlenstoffatomen und eine zweite Copolymerkomponente (B) aus Ethylen und einem Alphaolefin-Comonomer mit 6 bis 10 Kohlenstoffatomen umfasst, wobei die erste Copolymerkomponente (A) wenigstens eine erste und eine zweite Fraktion (A-1 und A-2) umfasst und vorzugsweise aus der ersten Fraktion (A-1) und der zweiten Fraktion (A-2) besteht.

**9.** Modifiziertes Polyethylen, das durch ein Verfahren gemäß den Ansprüchen 1 bis 8 erhalten wird, wobei das modifizierte Polyethylen die Form von Pellets aufweist.

**10.** Modifiziertes Polyethylen nach Anspruch 9, wobei die endgültige Schmelzflussrate der Pellets ($MRF_2$-Pellets) vorzugsweise im Bereich von 0,01 bis 2,0 g/10min, noch besser im Bereich von 0,05 bis 1,0 g/10min und noch besser im Bereich von 0,10 bis 0,80 g/10min liegt und/oder das Verhältnis von $MFR_2$ (Pellets)/$MFR_2$ (Beginn) vorzugsweise 0,50 oder weniger und besser 0,40 oder weniger beträgt.

**11.** Modifiziertes Polyethylen nach Anspruch 9 oder 10, wobei die Pellets, die das modifizierte Polyethylen-Copolymer enthalten, vorzugsweise eine $F_{30}$-Schmelzfestigkeit, gemessen gemäß ISO 16790:2005 bei einem Formdruck von 30 bar, von wenigstens 11,0 cN bis 20 cN und noch besser von wenigstens 11,4 cN bis 16 cN aufweisen und/oder eine maximale Sinkgeschwindigkeit $v_{max}$, gemessen gemäß ISO 16790:2005 bei einem Formdruck von 30 bar, von wenigstens 180 mm/s, vorzugsweise von wenigstens 185 mm/s und noch besser von wenigstens 190 mm/s wie wenigstens 195 mm/s aufweisen.

**12.** Verwendung eines poly(n)funktionalen Acrylats mit $n \geq 2$ als einem Koagens für das Reduzieren der Schmelzflussrate ($MFR_2$) (ISO1133, 2,16 kg, 190°C) eines Metallocen-erzeugten Polyethylen-Copolymers mit einer $MFR_2$ (Beginn) von 0,5 bis 10,0 g/10min (ISO1133, 2,16 kg, 190°C) und einer Dichte von 910 bis 945 kg/$m^3$ (ISO1183) um wenigstens 50%, wobei der Gelanteil, gemessen als xylolunlöslicher Anteil (XHU) des Polyethylen-Copolymers nach der Behandlung mit dem Koagens, kleiner als 0,1 Gewichtsprozent ist.

**13.** Blasfolie, die das modifizierte Polyethylen gemäß den Ansprüchen 9 bis 11 und 0,0 bis 40,0 Gewichtsprozent, vorzugsweise 5,0 bis 30,0 Gewichtsprozent und noch besser 8,0 bis 20,0 Gewichtsprozent eines Polyethylens mit niedriger Dichte (Low Density Polyethylen bzw. LDPE) enthält, wobei die Blasfolie **gekennzeichnet ist durch**:
eine Durchstoßfestigkeit (Dart-Drop Impact Strength bzw. DDI), bestimmt gemäß ASTM D1709, Methode A auf einer 40μm-Monoschicht-Blasfolie, von wenigstens 380 g bis 1700 g, vorzugsweise im Bereich von 400 bis 1200

g und noch besser im Bereich von 450 bis 1000 g.

**14.** Blasfolie nach Anspruch 13, wobei das LDPE vorzugsweise ein Polyethylen mit niedriger Dichte ist, das in einem Hochdruckprozess erzeugt wird, eine Dichte (ISO1183) im Bereich von 910 bis 940 kg/$m^3$, vorzugsweise im Bereich von 915 bis 935 kg/$m^3$ und noch besser im Bereich von 918 bis 930 kg/$m^3$ und eine Schmelzflussrate $MFR_2$ (ISO1133, 2,16 kg, 190°C) im Bereich von 0,05 bis 2,0 g/10min, vorzugsweise im Bereich von 0,10 bis 1,8 g/10min und noch besser im Bereich von 0,15 bis 1,5 g/10min aufweist.

**15.** Blasfolie nach Anspruch 13 oder 14, wobei die Blasfolie durch eine Anfangsversiegelungstemperatur (Sealing Initiation Temperature bzw. SIT), bestimmt auf einer Blasfolie mit einer Dicke von 40 μm (wie im experimentellen Abschnitt beschrieben), im Bereich von 80°C bis unter 110°C, vorzugsweise im Bereich von 85°C bis 100°C und noch besser im Bereich von 88°C bis 96°C und eine Heißnahtfestigkeit (Hot Tack Force), bestimmt auf einer Blasfolie mit einer Dicke von 40 μm (wie in dem experimentellen Abschnitt beschrieben), im Bereich von 2,5 bis 5,0 N, vorzugsweise im Bereich von 2,8 bis 4,8 N und noch besser im Bereich von 3,0 bis 4,5 N gekennzeichnet ist.

## Revendications

**1.** Procédé pour la réduction du $MFR_2$ (1801133, 2,16 kg, 190 °C) d'un polyéthylène, comprenant les étapes suivantes :

(i) la formation d'un mélange (M) en combinant

(i-1) un copolymère de polyéthylène produit par un métallocène, ayant un $MFR_2$ (de départ) de 0,5 à 10,0 g/10 min (1801133, 2,16 kg, 190 °C) et une densité de 910 à 945 kg/$m^3$ (ISO1183) avec (i-2) 0,05 à 1,0 % en poids, par rapport au poids total du mélange (M), d'un acrylate poly(n)fonctionnel, avec $n \geq 2$, en tant que co-agent
et éventuellement avec (i-3) un initiateur radicalaire ;

(ii) l'extrusion du mélange (M) de l'étape (i) à une température supérieure au point de fusion du copolymère de polyéthylène et, dans le cas où un initiateur radicalaire (i-3) est présent, à une température supérieure à la température d'initiation de l'initiateur pour donner un copolymère de polyéthylène modifié sous la forme de pastilles ;
lesdites pastilles ayant une densité de 910 à 945 kg/$m^3$ (ISO1183),
une teneur en insolubles dans le xylène (XHU, déterminée tel que décrit dans la partie expérimentale) inférieure à 0,1 % en poids,
un $MFR_2$ (pastilles) de 0,001 à 4,0 g/10 min (1801133, 2,16 kg, 190 °C) et le $MFR_2$ (pastilles) étant inférieur au $MFR_2$ (de départ) de telle sorte que $MFR_2$ (pastille)/$MFR_2$ (de départ) est de 0,60 ou moins et
une résistance à l'état fondu $F_{30}$ >10,5 cN, telle que mesurée selon la norme ISO 16790:2005 à une pression de filière de 30 bars.

**2.** Procédé selon la revendication 1, dans lequel l'acrylate poly(n)fonctionnel est un di- ou tri-(méth)acrylate choisi dans le groupe constitué par le diméthacrylate de 1,4-butanediol (BDDMA), le diméthacrylate de 1,6-hexanediol (HDDMA), le diméthacrylate de 1,3-butylèneglycol (BGDMA), le diméthacrylate d'éthylèneglycol (EGDMA), le diméthacrylate de dodécanediol (DDDMA), le triméthacrylate de triméthylolpropane (TMPTMA), l'ester de triméthacrylate (ester TMA) et leurs mélanges.

**3.** Procédé selon la revendication 2, dans lequel l'acrylate poly(n)fonctionnel est préférablement le diméthacrylate de 1,4-butanediol (BDDMA) ou le triméthacylate de triméthylolpropane (TMPTMA), plus préférablement le triméthacylate de triméthylolpropane (TMPTMA).

**4.** Procédé selon l'une quelconque des revendications précédentes, dans lequel le mélange (M) dans l'étape (i) comprend 0,00 à 1,0 % en poids, préférablement 0,00 à 0,8, plus préférablement 0,00 à 0,5 % en poids par rapport au poids total du mélange (M) d'un initiateur radicalaire (i-3).

**5.** Procédé selon la revendication 4, dans lequel le générateur de radicaux libres est un peroxyde organique, qui est choisi dans le groupe constitué par les peroxydes de diacyle, les peroxydes de dialkyle, les peroxycétals, les peroxyesters, les peroxycarbonates, et leurs mélanges.

6. Procédé selon l'une quelconque des revendications précédentes, dans lequel le copolymère de polyéthylène (i-1) dans l'étape (i) est sous la forme d'une poudre et/ou dans lequel le mélange est extrudé à une température dans la plage de 165 °C à 280 °C, préférablement dans la plage de 170 °C à 250 °C, plus préférablement dans la plage de 180 °C à 240 °C, et encore plus préférablement dans la plage de 180 °C à 230 °C.

7. Procédé selon l'une quelconque des revendications précédentes, dans lequel le copolymère de polyéthylène (i-1) dans l'étape (i) est un terpolymère.

8. Procédé selon la revendication 7, dans lequel le copolymère de polyéthylène (i-1) dans l'étape (i) est un terpolymère de polyéthylène multimodal, qui comprend un premier composant copolymère (A) d'éthylène et d'un comonomère d'alpha-oléfine ayant 4 à 10 atomes de carbone et un deuxième composant copolymère (B) d'éthylène et d'un comonomère d'alpha-oléfine ayant 6 à 10 atomes de carbone, dans lequel le premier composant copolymère (A) comprend au moins une première et une deuxième fraction (A-1 et A-2), consiste préférablement en une première fraction (A-1) et une deuxième fraction (A-2).

9. Polyéthylène modifié obtenu par un procédé selon l'une quelconque des revendications 1 à 8, dans lequel le polyéthylène modifié est sous la forme de pastilles.

10. Polyéthylène modifié selon la revendication 9, dans lequel l'indice de fluidité à chaud final des pastilles ($MFR_2$ pastilles) est préférablement dans la plage de 0,01 à 2,0 g/10 min, plus préférablement de 0,05 à 1,0 g/10 min, et encore plus préférablement de 0,10 à 0,80 g/10 min et/ou le rapport $MFR_2$ (pastilles)/$MFR_2$ (de départ) est préférablement de 0,50 ou moins, plus préférablement de 0,40 ou moins.

11. Polyéthylène modifié selon la revendication 9 ou 10, dans lequel les pastilles comprenant le copolymère de polyéthylène modifié ont préférablement une résistance à l'état fondu $F_{30}$, telle que mesurée selon la norme ISO 16790:2005 à une pression de filière de 30 bars, d'au moins 11,0 cN jusqu'à 20 cN, plus préférablement d'au moins 11,4 cN jusqu'à 16 cN et/ou présentent une vitesse d'étirage maximale $v_{max}$, telle que mesurée selon la norme ISO 16790:2005 à une pression de filière de 30 bars, d'au moins 180 mm/s, préférablement d'au moins 185 mm/s et plus préférablement d'au moins 190 mm/s, telle que d'au moins 195 mm/s.

12. Utilisation d'un acrylate poly(n)fonctionnel avec $n \geq 2$ en tant que co-agent pour réduire le $MFR_2$ (ISO1133, 2,16 kg, 190 °C) d'un copolymère de polyéthylène produit par un métallocène ayant un $MFR_2$ (de départ) de 0,5 à 10,0 g/10 min (ISO1133, 2,16 kg, 190 °C) et une densité de 910 à 945 kg/$m^3$ (ISO1183) d'au moins 50 %, la teneur en gel mesurée en tant que XHU dudit copolymère de polyéthylène après traitement avec ledit co-agent étant inférieure à 0,1 % en poids.

13. Film soufflé comprenant le polyéthylène modifié selon les revendications 9 à 11 et 0,0 à 40,0 % en poids, préférablement 5,0 à 30,0 % en poids, plus préférablement 8,0 à 20,0 % en poids, d'un LDPE, le film soufflé étant **caractérisé par**
une résistance à l'impact de fléchettes en chute libre (DDI) déterminée selon la norme ASTM D1709, méthode A, sur un film soufflé monocouche de 40 $\mu$m, d'au moins 380 g jusqu'à 1 700 g, préférablement dans la plage de 400 à 1 200 g, et plus préférablement dans la plage de 450 à 1 000 g.

14. Film soufflé selon la revendication 13, dans lequel le LDPE est préférablement un polyéthylène basse densité produit dans un procédé haute pression, ayant une densité (ISO1183) dans la plage de 910 à 940 kg/$m^3$, plus préférablement dans la plage de 915 à 935 kg/$m^3$, encore plus préférablement dans la plage de 918 à 930 kg/$m^3$ et un indice de fluidité à chaud $MFR_2$ (ISO1133, 2,16 kg, 190 °C) dans la plage de 0,05 à 2,0 g/10 min, plus préférablement dans la plage de 0,10 à 1,8 g/10 min, et encore plus préférablement dans la plage de 0,15 à 1,5 g/10 min.

15. Film soufflé selon la revendication 13 ou 14, dans lequel le film soufflé est **caractérisé par** une température d'initiation de soudage (SIT) déterminée sur un film soufflé d'une épaisseur de 40 $\mu$m (tel que décrit dans la partie expérimentale) dans la plage de 80 °C à moins de 110 °C, préférablement dans la plage de 85 °C à 100 °C et plus préférablement dans la plage de 88 °C à 96 °C et une force de collage à chaud déterminée sur un film soufflé d'une épaisseur de 40 $\mu$m (tel que décrit dans la partie expérimentale) dans la plage de 2,5 N à 5,0 N, préférablement dans la plage de 2,8 à 4,8 N et plus préférablement dans la plage de 3,0 à 4,5 N.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010009825 A
- WO 2016198273 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, 1-198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- **M. H. WAGNER.** Rheotens-Mastercurves and Drawability of Polymer Melts. *Polymer Engineering and Sience,* vol. 36, 925-935
- *CHEMICAL ABSTRACTS,* 151840-68-5